# EUROPEAN PATENT APPLICATION

(11) **EP 4 738 284 A1**
(43) Date of publication of application: **06.05.2026**
(21) Application number: 24210028.7
(22) Date of filing: 31.10.2024
(51) Int. Cl.: G06V 10/82, G06N 3/045, G06V 20/58

(54) **A METHOD FOR CLASSIFYING A TRAFFIC SIGN IN AN IMAGE**

(71) Applicant: Zenseact AB, 417 56 Gothenburg (SE)
(72) Inventor: VERBEKE, Willem, 412 60 Göteborg (SE); MÅNSSON, Olle, 417 39 Göteborg (SE)
(74) Representative: Zacco Sweden AB

(57) **Abstract**

The herein disclosed technology relates to a computer-implemented method (100) for classifying a traffic sign in an image, as well as a computing device and vehicle thereof. The method (100) comprises: obtaining (S102) the image, captured by a camera of a vehicle, depicting at least a portion of a surrounding environment of the vehicle; identifying (S104) a region in the image corresponding to a traffic sign, by processing the image through a first machine learning model configured to output detections of traffic signs in input images; extracting (S106), from the image, a crop corresponding to the identified region, wherein the crop has a native resolution based on a size of the identified region in relation to the obtained image; and determining (S108) classification data of the traffic sign by processing the crop, at the native resolution, through a second machine learning model, wherein the second machine learning model is an attention-based neural network, trained to process input images of traffic signs of varying resolution and to generate corresponding classification data, wherein the second machine learning model applies attention on a pixel-level of the input images.

## Description

### TECHNICAL FIELD

The present disclosed technology relates to the field of automated driving systems. In particular, it is related to methods and devices for traffic sign recognition.

### BACKGROUND

Traffic sign recognition (TSR) systems is an integral part of advanced driver assistance systems (ADAS) and autonomous driving (AD) technologies. These systems are designed to automatically detect and interpret traffic signs in real-time, using cameras or other onboard sensors, to either provide the driver with information about speed limits, and other traffic regulations, or to the automated driving system as a basis for the decision and control of the automated operations of the vehicle.

Early TSR systems use basic image processing techniques to detect distinctive sign shapes and colors. However, these systems can have some limitations in their ability to adapt to various environmental conditions such as varying lighting, weather, and obscured or worn-out signs. Although effective in standard conditions, these early systems may sometime lack performance in more complex driving environments. For instance, they may struggle with recognizing signs that are faded, partially obscured, or positioned at unconventional angles. In addition, variations in sign designs across different countries or regions present further challenges to these systems.

Recent advancements in deep learning and artificial intelligence have improved the accuracy of TSR systems by enabling models to learn from large datasets of traffic signs and road environments. These systems typically use convolutional neural networks (CNNs), sometimes together with other machine learning techniques, to identify traffic signs with great precision, even in adverse conditions.

However, while these approaches have shown promise, there is always a need for improving the performance of TSR systems, e.g. in terms of reducing false positives and ensuring real-time performance and robustness across a broader range of driving environments. Such improvements could enhance the capability of automated driving systems, where accurate traffic sign interpretation is crucial for ensuring compliance with road regulations.

### SUMMARY

The herein disclosed technology seeks to mitigate, alleviate or eliminate one or more of the above-identified deficiencies and disadvantages in the prior art to address various problems relating to traffic sign recognition, TSR, systems. More specifically, the inventors have realized that the performance of a CNN-based approach for TSR is limited by the fact that it requires the input to be of a certain size (i.e. the input image to have a certain resolution). In reality, every traffic sign captured by a camera will be of difference sizes, depending e.g. on the distance to the camera at the point of capture, or by the fact that different types of traffic signs have different shapes and sizes. This means that in CNN-based approaches, the image fed to the traffic sign classifier has to either be up-sampled or down-sampled. The aim of the disclosed technology is to address this issue by introducing an attention based neural network approach, to a two-stage traffic sign recognition pipeline. More specifically, the new and improved way of performing traffic sign recognition is configured to apply cross-attention directly on the image pixels, to enable it to work at different resolution images. Various aspects and embodiments of the disclosed technology are defined below and in the accompanying independent and dependent claims.

According to a first aspect, there is provided a computer-implemented method for classifying a traffic sign in an image. The method comprises obtaining the image, captured by a camera of a vehicle, depicting at least a portion of a surrounding environment of the vehicle. The method further comprises identifying a region in the image corresponding to a traffic sign, by processing the image through a first machine learning model configured to output detections of traffic signs in input images. The method further comprises extracting, from the image, a crop corresponding to the identified region. The crop having a native resolution based on a size of the identified region in relation to the obtained image. The method further comprises determining classification data of the traffic sign by processing the crop, at the native resolution, through a second machine learning model. The second machine learning model being an attention-based neural network, trained to process input images of traffic signs of varying resolution and to generate corresponding classification data, and wherein the second machine learning model applies attention on a pixel-level of the input images. With this aspect of the disclosed technology, similar advantages and preferred features are present as in the other aspects.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect, there is provided a computing device for classifying a traffic sign in an image. The computing device comprising control circuitry. The control circuitry is configured to obtain the image, captured by a camera of a vehicle, depicting at least a portion of a surrounding environment of the vehicle. The control circuitry is further configured to identify a region in the image corresponding to a traffic sign, by processing the image through a first machine learning model configured to output detections of traffic signs in input images. The control circuitry is further configured to extract, from the image, a crop corresponding to the identified region, wherein the crop has a native resolution based on a size of the identified region in relation to the obtained image. The control circuitry is further configured to determine classification data of the traffic sign by processing the crop, at the native resolution, through a second machine learning model, wherein the second machine learning model is an attention-based neural network, trained to process input images of traffic signs of varying resolution and to generate corresponding classification data, wherein the second machine learning model applies attention on a pixel-level of the input images. With this aspect of the disclosed technology, similar advantages and preferred features are present as in the other aspects.

According to a fourth aspect, there is provided a vehicle comprising a camera and the computing device according to any embodiment of the third aspect. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

The advantages of the disclosed technology at least partly stem from the two-stage TSR pipeline, in combination with an attention-based traffic sign classifier.

An advantage of some embodiments is that the traffic sign classification model can operate on any size of data array. In other words, the model can process images of any size, which has been found particularly useful for the application of traffic sign recognition. In practice, removing the need for up-sampling or down-sampling, can improve the performance of the TSR system. The down-sampling can otherwise lead to loss of information, and the up-sampling to increased compute and aspect ratio distortions.

Another advantage of some embodiments is that the traffic sign classification model can use information about the true aspect ratio of the cropped-out traffic sign, to further take this into account in the classification process. For example, information about how wide or square the traffic sign is may help in distinguishing between different traffic signs. This information would get lost in a CNN-based approach.

Another advantage of some embodiments is that other inputs can be flawlessly fed into the model, for instance text characters on the sign or other properties. This may further expand the capabilities of the TSR system, and improve the results.

Another advantage of some embodiments is that it builds upon a two-state TSR pipeline, which offers advantages from a development perspective, as well as easier adaptation to different geographical regions having different sets of traffic signs.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method, in accordance with some embodiments;
Figure 2 is a schematic illustration of a computing device, in accordance with some embodiments;
Figure 3 is a schematic illustration of a vehicle, in accordance with some embodiments;
Figure 4A illustrates, by way of example, a two-stage traffic sign recognition pipeline, in accordance with some embodiments;
Figure 4B illustrates, by way of example, an architecture of the second machine learning model, in accordance with some embodiments;
Figure 4C illustrates, by way of another example, an architecture of the second machine learning model, in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first machine learning model could be termed a second machine learning model, and, similarly, a second machine learning model could be termed a first machine learning model, without departing from the scope of the embodiments. The first machine learning model and the second machine learning model are both machine learning model, but they are not the same machine learning model.

As used herein, the wording "one or more of" a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

Throughout the present disclosure, reference is made to machine learning models (or just "models" for short). By this, it is herein meant any form of machine learning algorithm, such as deep learning models, neural networks, or the like, which is able to learn and adapt from input data and subsequently make predictions, decisions, or classifications based on new data.

Deployment of a machine learning model typically involves a training phase where the model learns from labeled or unlabeled training data to achieve accurate predictions during the subsequent inference phase. The training data (and input data during inference) may e.g. be an image, or sequence of images, LIDAR data (i.e. a point cloud), radar data, or any other form of data. Furthermore, the training/input data may comprise a combination or fusion of one or more different data types. Additionally, or in combination, it may comprise a combination or fusion of two or more instances of the same data types, such as two or more images from different cameras.

The machine learning model may be implemented in some embodiments using publicly available suitable software development machine learning code elements, for example, such as those which are available in Pytorch, TensorFlow, and Keras, or in any other suitable software development platform, in any manner known to be suitable to someone of ordinary skill in the art.

### Overview

As explained in the foregoing, the disclosed technology relates to a two-stage traffic sign recognition system. In a two-stage approach, the recognition task is divided between two separate models. First, an object detection model (or more specifically, a traffic sign detection model) is used for detecting the traffic signs in an image. During inference, the object detection model will identify where in the image traffic signs are, without saying what types of traffic signs they are. The identified patches can then be cropped out of the image and fed to the second stage. In the second stage, a second model is used to classify the traffic signs. More specifically, the cropped-out traffic signs are fed to a traffic sign classifier (or traffic sign classification model), which outputs classification data for each crop. The two models can be trained separately. This means that the two parts can be used independently, to e.g. have different traffic sign classification models for different geographical regions (e.g. different countries), while using the same object detection model. This then simplifies the development process. Moreover, the corresponding data mining and model iterations, as well as data refinement are easier if one has access to a separate traffic sign classification model. In addition, many optimizations and improvements to traffic sign classification are uncorrelated from improvements to object detection, so separating the pipeline makes improvement iterations for each of them much faster and easier to interpret. These are all advantageous compared to a one-stage approach, where a single neural network is trained to both recognize where in the image the traffic signs are, and to classify what they are. This means that the detection part and the classification part have to be trained end-to-end. Consequently, if you want different traffic sign recognition system for different geographical regions (e.g. different countries with different types of traffic signs) you need to retrain the entire network.

Typically, CNNs are used in object classification tasks in images. However, for TSR systems, this results in a technical complication in the two-stage approach. Namely, that CNNs must always operate on the same resolution in practice. Every traffic sign depicted in an image is generally however of different size, depending e.g. on distance between the camera and the traffic sign, and the actual physical size of the traffic sign. This means that after the object detection step, some traffic signs must be down-sampled and some must be up-sampled before being fed to the traffic sign classification model. More specifically, large traffic signs, or traffic signs close to the vehicle, will require significant down-sampling, leading to loss of information, and subsequently classification performance loss. Small, or distant traffic signs instead requires to be up-sampled, which can create problems such as aspect ratio distortion, and requiring increased compute. To this end, a two-state approach capable of operating at varying resolutions is proposed. This builds upon an attention-based network, which makes it possible to operate on the native resolution of each traffic sign. The attention can be applied on the image pixels directly, i.e. without any further processing in between. By avoiding convolution (or similar) operations, it is possible to achieve a model that natively works for any resolution.

### Embodiments

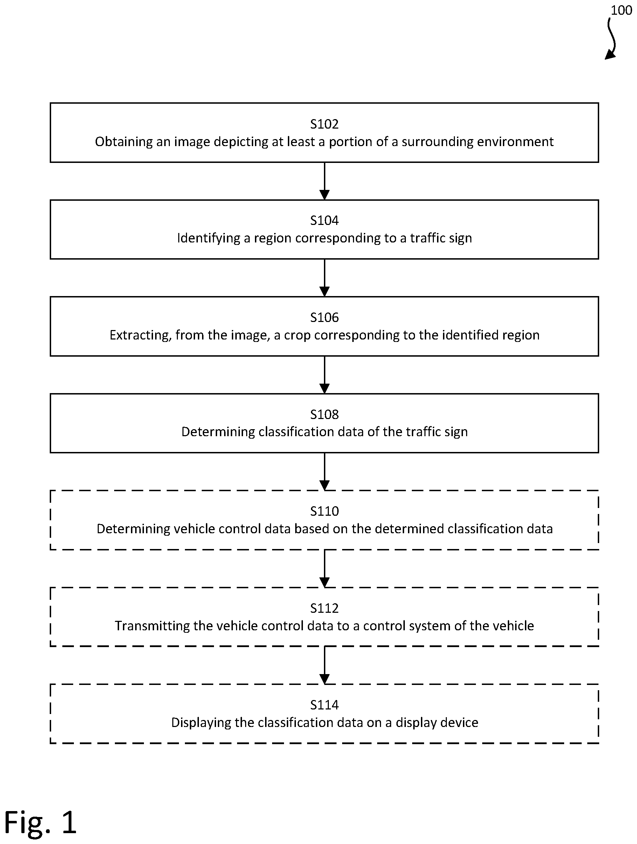

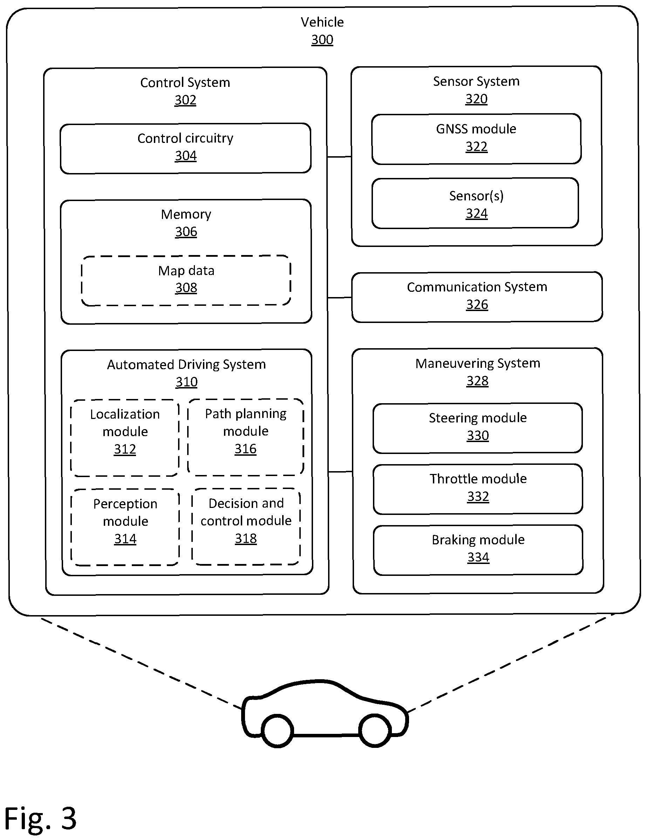

Figure 1 is a schematic flowchart representation of a computer-implemented method 100 for classifying a traffic sign in an image. Put differently, it can be a method 100 for traffic sign recognition (TSR). As explained in the foregoing, this involves both traffic sign detection (or identification), and traffic sign classification. The method 100 may be performed in a vehicle (i.e. by computing resources of the vehicle), such as the vehicle 300 described below in connection with Fig. 3.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. For example, the steps denoted S110, S112 and S114 can be performed independently of each other. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art. It should further be appreciated that the method 100 of Fig. 1 comprises some steps which are illustrated as boxes in solid lines and some steps which are illustrated in dashed lines. The steps which are shown in solid lines are steps which are comprised in the broadest example embodiment of the method 100. The steps which are comprised in dashed lines are examples of a number of optional steps which may form part of a number of alternative embodiments. It should be appreciated that the optional steps need not be performed in order. Furthermore, it should be appreciated that not all of the steps need to be performed. The example steps may be performed in any order and in any combination.

The method 100 comprises obtaining S102 an image depicting at least a portion of a surrounding environment of a vehicle. The image being captured by a camera of the vehicle.

The surrounding environment of the vehicle can be understood as a general area around the vehicle in which objects (such as traffic signs, or other vehicles, landmarks, obstacles, etc.) can be detected and identified by vehicle sensors (radar, LIDAR, cameras, etc.), i.e. within a sensor range of the ego-vehicle. The image may thus depict the world around the vehicle, including any potential traffic signs in the vicinity of the vehicle.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In this specific case, the image may be obtained S102 by a process of capturing the image, using said camera. Alternatively, the image may be obtained S102 by being retrieved from an intermediate storage, or the like, where it has been stored after being captured.

The method 100 further comprises identifying S104 a region (or patch) in the image corresponding to a traffic sign, by processing the image through a first machine learning model configured to output detections of traffic signs in input images. In other words, the image may be fed to the first machine learning model being an object detection model (or more specifically a traffic sign detection model). The first machine learning model may then output the region corresponding to the detected traffic sign. The region can be represented by an area, within a reference frame of the image, corresponding to the traffic sign. The region may for instance be represented by a bounding box around the traffic sign. Any suitable traffic sign detection model may be used, as realized by the person skilled in the art.

It is to be noted that the method 100 is not limited to identifying just one traffic sign in the image. In some cases, more than one traffic sign may be depicted in the same image. Each identified traffic sign may then be detected, and processed individually through the steps of the method 100 as described in the following.

The method 100 further comprises extracting S106, from the image, a crop corresponding to the identified region. In other words, the image pixels belonging to the identified region may be extracted for further processing. The crop can thus be understood as a sub-portion of the original image.

The crop thereby has a native resolution based on a size of the identified region in relation to the obtained image. In other words, the resolution of the crop depends on the size of the traffic sign as depicted in the image. The resolution of the crop may thus be seen as the number of pixels, i.e. number of pixels in height x number of pixels in width. More specifically, each identified region may have different resolutions (or sizes) depending on how large part of the image is taken up by the traffic sign. For example, large traffic signs, or traffic signs located at a relatively short distance to the camera (i.e. at a moment of capture), will appear larger than smaller traffic signs, or traffic signs located at a relatively large distance to the camera. The native resolution shall thus be understood as the resolution the crop gets when extracted from the image, i.e. without any processing such as up-sampling or down-sampling.

The method 100 further comprises determining S108 classification data of the traffic sign by processing the crop, at the native resolution, through a second machine learning model. In other words, the crop may be processed through a traffic sign classification model to determine associated classification data. The classification data may be indicative of a type of the traffic sign, such as a stop sign, a speed limit 50km/h sign, a yield sign, etc. The classification data may further be indicative of a confidence of the predicted type of traffic sign.

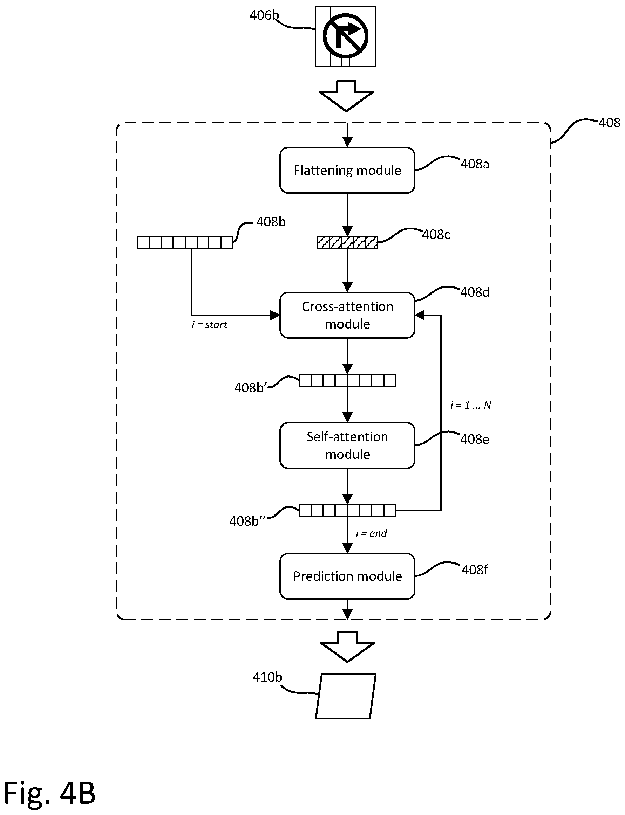

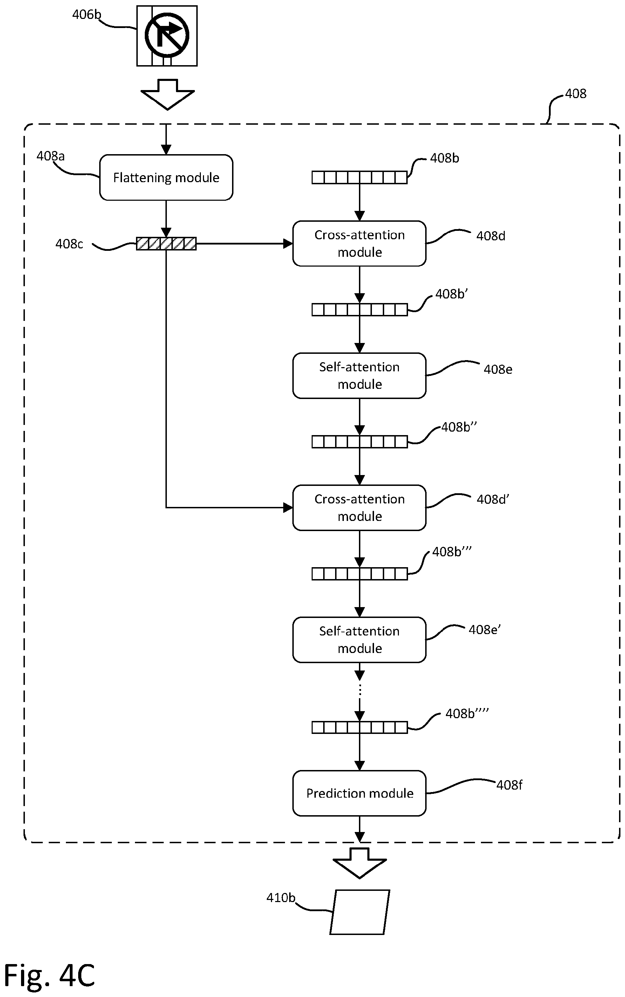

The second machine learning model is an attention-based neural network. In other words, the second machine learning model employs attention techniques on the input. By attention-based neural network, it is herein meant any neural network which employs attention operations, such as cross-attention or self-attention. The second machine learning model may for instance have a transformer-based architecture. More specifically, the second machine learning model may comprise at least one cross-attention module and at least one self-attention module. In some embodiments, the second machine learning model may comprise a plurality of interleaved cross-attention and self-attention modules (or blocks). For further details regarding the second machine learning model, reference is made to below, in connection with Fig. 4B and 4C.

Moreover, the second machine learning model is trained to process input images of traffic signs of varying resolution and to generate corresponding classification data. The second machine learning model may be trained using a training dataset comprising a plurality of images of a variety of different resolutions. Each image of the plurality of images may have associated annotation data. The annotation data may e.g. be ground truth labels of the different traffic signs included in the training dataset, for enabling supervised learning of the second machine learning model. The second machine learning model may thus be trained on images of at least two different resolutions. This may provide for a model with better generalization across different resolutions.

Moreover, the second machine learning model applies attention on a pixel-level of the input images. By applying attention on a pixel-level it is herein meant that the attention is applied directly on the pixel values of the input crop. In other words, the second machine learning model may directly cross attend the pixels of the crop to embed them into a latent array, for further processing. In some embodiments, the crop is flattened into an input data array, and then fed to the second machine learning model. The cross attention is then applied to the input data array. This will be described in more detailed in the following.

Processing the crop through the second machine learning model may comprise the following substeps. First, (i) flattening the crop into a numerical input data array. For instance, for an image crop of size (H, W, 3), it can be flattened to a data array of size (H*W, 3), where 3 represents the three color channels in case of an RGB image. Second, (ii) obtaining a latent array having a set of initial values. The latent array can be seen as a set of a predefined number of high-dimensional vectors on which predictions can be performed, after the latent array having learnt useful information about the input. The initial values of the latent array can be assigned randomly. Third, (iii) updating the latent array by alternatingly processing the input data array and a latent array through the cross-attention module and the self-attention module for a number of iterations, thereby generating an updated latent array. In other words, the latent array is processed together with the input data array, by alternatingly applying cross-attention and self-attention. The third step can be seen as a process of allowing the latent array to iteratively extract and learn useful information from the input. More specifically, this can be done by the cross-attention module applying cross-attention (a standard operation of e.g. Transformer networks) to the latent array and the numerical input data array. This can be seen as the latent array looking at the data array, and extracting whatever information that can be useful to solve the final task. The self-attention module then applies self-attention (another standard transformer operation) to the latent array. This can be seen as the vectors of the latent array sharing information to each other of what they have learned from the input data array. The process of applying cross-attention and self-attention can be repeated for the number of iterations. Thereby, the latent array is allowed to iteratively extract information from the input data array, e.g. until the latent array contains all the relevant information from the input. The number of iterations may be a fixed number of iterations. Alternatively, the number of iterations may be set based on a convergence criterion being met. The updated latent array, which is the resulting latent array after having performed the number of iterations, may then be used in the next step. Fourth, (iv) predicting classification data for the traffic sign, based on the updated latent array. Predicting the classification data may be done by processing the updated latent array through a prediction module, provided at the end of the second machine learning model.

The process set out above can operate on any size of data array, thus making it possible to process image crops of varying sizes (i.e. different resolutions). This is due to the fact that the cross-attention operation applies transformations on each data array entry separately, rather than applying a convolutional filter with a certain padding that is dependent on the input image size. In other words, the cross-attention is applied directly to the image pixels of the crop, after having transformed it into the data array.

In some embodiments, the method 100 further comprises determining S110 vehicle control data based on the determined classification data. The vehicle control data may be determined by the automated driving system (ADS), e.g. as part of a decision and control module. The vehicle control data may e.g. be a stop signal, a proceed signal, a signal to adapt the speed of the vehicle, etc.

The method 100 may further comprise transmitting S112 the vehicle control data to a control system of the vehicle. Or more specifically, the vehicle control data may be transmitted to a maneuvering system of the vehicle. The vehicle control data may thus be transmitted for execution of a driving maneuver of the vehicle.

In some embodiments, the method 100 further comprises displaying S114 the classification data on a display device of the vehicle, by rendering the classification data as a graphical representation on the display device. The classification data may e.g. be displayed for assisting the driver in their operation of the vehicle. As an example, the current speed limit may be displayed to the driver, in case they forget the current speed limit, or miss that the speed limit has changed.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

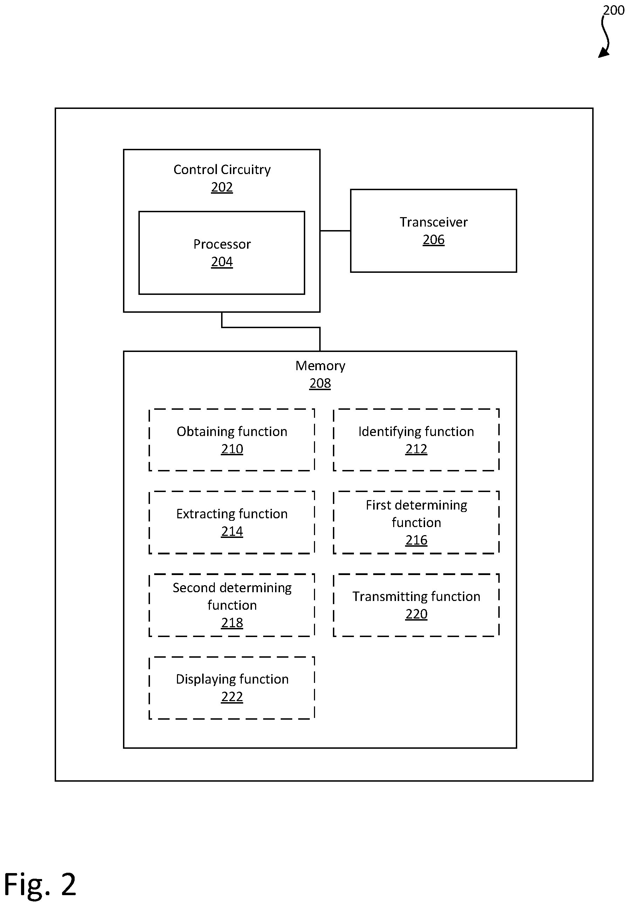

Figure 2 is a schematic illustration of a computing device 200, in accordance with some embodiments of the disclosed technology. The computing device 200 may be configured to perform the method 100 as described in connection with Fig. 1. Thus, the computing device 200 may be a computing device 200 for classifying a traffic sign in an image.

The computing device 200 as described herein, refers to a computer system, or any device or general computing system configured to perform various functions. Even though the computing device 200 is herein illustrated as one device, the computing device 200 may be a distributed computing system, formed by a number of different devices.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps may be implemented in one or more functions stored in the memory 208.

The transceiver 206 is configured to enable the computing device 200 to communicate with other entities, such as other devices. The transceiver 206 may both transmit data from and receive data to the computing device 200. The computing device 200 may e.g. be part of a vehicle. The transceiver 206 may then allow the computing device 200 to communicate with other systems of the vehicle, or with external entities, such as other vehicles, or a remote server.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present.

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 is described.

The control circuitry 202 is configured to obtain the image, captured by a camera of a vehicle, depicting at least a portion of a surrounding environment of the vehicle. This may be performed e.g. by execution of an obtaining function 210.

The control circuitry 202 is further configured to identify a region in the image corresponding to a traffic sign, by processing the image through a first machine learning model configured to output detections of traffic signs in input images. This may be performed e.g. by execution of a identification function 212.

The control circuitry 202 is further configured to extract, from the image, a crop corresponding to the identified region. The crop having a native resolution based on a size of the identified region in relation to the obtained image. This may be performed e.g. by execution of an extracting function 214.

The control circuitry 202 is further configured to determine classification data of the traffic sign by processing the crop, at the native resolution, through a second machine learning model. The second machine learning model being an attention-based neural network, trained to process input images of traffic signs of varying resolution and to generate corresponding classification data, and wherein the second machine learning model applies attention on a pixel-level of the input images. This may be performed e.g. by execution of a first determining function 216.

The control circuitry 202 may be further configured to determine vehicle control data based on the determined classification data This may be performed e.g. by execution of a second determining function 218.

The control circuitry 202 may be further configured to transmit the vehicle control data to a control system of the vehicle. This may be performed e.g. by execution of a transmitting function 220.

The control circuitry 202 may be further configured to display the classification data on a display device of the vehicle, by rendering the classification data as a graphical representation on the display device. This may be performed e.g. by execution of a displaying function 222.

It should be noted that the principles, features, aspects, and advantages of the method 100 as described above in connection with Fig. 1, are applicable also to the computing device 200 as described herein. In order to avoid undue repetition, reference is made to the above. Hence, the control circuitry may be configured to perform any of the steps as described as part of the method 100.

Figure 3 is a schematic illustration of a vehicle 300 in accordance with some embodiments. The vehicle 300 may be equipped with an Automated Driving System (ADS) 310. As used herein, a "vehicle" is any form of motorized transport. For example, the vehicle 300 may be any road vehicle such as a car (as illustrated herein), a motorcycle, a (cargo) truck, a bus, a smart bicycle, etc. The vehicle 300 may be equipped with the computing device 200 as described above. The vehicle 300 is thus enabled for performing the disclosed technology.

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an ADS aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

The vehicle 300 comprises a number of elements which can be commonly found in autonomous or semi-autonomous vehicles. It will be understood that the vehicle 300 can have any combination of the various elements shown in Fig. 3. Moreover, the vehicle 300 may comprise further elements than those shown in Fig. 3. While the various elements are herein shown as located inside the vehicle 300, one or more of the elements can be located externally to the vehicle 300. Further, even though the various elements are herein depicted in a certain arrangement, the various elements may also be implemented in different arrangements, as readily understood by the skilled person. It should be further noted that the various elements may be communicatively connected to each other in any suitable way. The vehicle 300 of Fig. 3 should be seen merely as an illustrative example, as the elements of the vehicle 300 can be realized in several different ways.

The vehicle 300 comprises a control system 302. The control system 302 is configured to carry out overall control of functions and operations of the vehicle 300. The control system 302 comprises control circuitry 304 and a memory 306. The control circuitry 302 may physically comprise one single circuitry device. Alternatively, the control circuitry 302 may be distributed over several circuitry devices. As an example, the control system 302 may share its control circuitry 304 with other parts of the vehicle. The control circuitry 302 may comprise one or more processors, such as a central processing unit (CPU), microcontroller, or microprocessor. The one or more processors may be configured to execute program code stored in the memory 306, in order to carry out functions and operations of the vehicle 300. The processor(s) may be or include any number of hardware components for conducting data or signal processing or for executing computer code stored in the memory 306. In some embodiments, the control circuitry 304, or some functions thereof, may be implemented on one or more so-called system-on-a-chips (SoC). As an example, the ADS 310 may be implemented on a SoC. The memory 306 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 306 may include database components, object code components, script components, or any other type of information structure for supporting the various activities of the present description.

In the illustrated example, the memory 306 further stores map data 308. The map data 308 may for instance be used by the ADS 310 of the vehicle 300 in order to perform autonomous functions of the vehicle 300. The map data 308 may comprise high-definition (HD) map data and/or standard-definition (SD) map data. It is contemplated that the memory 308, even though illustrated as a separate element from the ADS 310, may be provided as an integral element of the ADS 310. In other words, according to some embodiments, any distributed or local memory device may be utilized in the realization of the present inventive concept. Similarly, the control circuitry 304 may be distributed e.g. such that one or more processors of the control circuitry 304 is provided as integral elements of the ADS 310 or any other system of the vehicle 300. In other words, according to an exemplary embodiment, any distributed or local control circuitry device may be utilized in the realization of the disclosed technology.

The vehicle 300 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 300. The sensor system 320 may further comprise one or more sensors 324. The one or more sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 300. In the context of the disclosed technology, the vehicle 300 comprises at least one camera for capturing images in which traffic signs can be detected and classified.

The vehicle 300 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 300 or with local infrastructure elements. ETSI is working on cellular standards for vehicle communication and for instance 5G is considered as a suitable solution due to the low latency and efficient handling of high bandwidths and communication channels.

The communication system 326 may further provide the possibility to send output to a remote location (e.g. remote server, operator or control center) by means of the one or more antennas. Moreover, the communication system 326 may be further configured to allow the various elements of the vehicle 300 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 300 further comprises a maneuvering system 320. The maneuvering system 328 is configured to control the maneuvering of the vehicle 300. The maneuvering system 328 comprises a steering module 330 configured to control the heading of the vehicle 300. The maneuvering system 328 further comprises a throttle module 332 configured to control actuation of the throttle of the vehicle 300. The maneuvering system 328 further comprises a braking module 334 configured to control actuation of the brakes of the vehicle 300. The various modules of the steering system 328 may receive manual input from a driver of the vehicle 300 (i.e. from a steering wheel, a gas pedal and a brake pedal respectively). However, the maneuvering system 328 may be communicatively connected to the ADS 310 of the vehicle, to receive instructions on how the various modules should act. Thus, the ADS 310 can control the maneuvering of the vehicle 300.

As stated above, the vehicle 300 comprises an ADS 310. The ADS 310 may be part of the control system 302 of the vehicle. The ADS 310 is configured to carry out the functions and operations of the autonomous functions of the vehicle 300. The ADS 310 can comprise a number of modules, where each module is tasked with different functions of the ADS 310.

The ADS 310 may comprise a localization module 312 or localization block/system. The localization module 312 is configured to determine and/or monitor a geographical position and heading of the vehicle 300, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS. The device 200 as described above, may be provided e.g. as part of the localization module 312. Hence, the vehicle 300 is configured to perform the steps of the method 100 described above.

The ADS 310 may further comprise a perception module 314 or perception block/system. The perception module 314 may refer to any commonly known module and/or functionality, e.g. comprised in one or more electronic control modules and/or nodes of the vehicle 300, adapted and/or configured to interpret sensory data - relevant for driving of the vehicle 300 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320. The production model, as referred to above, may be provided as part of the ADS 310, or more specifically as part of the perception module 314. The perception module 314 may thus encompass a TSR system for performing the techniques described above in connection with Fig. 1 and Fig. 2.

The localization module 312 and/or the perception module 314 may be communicatively connected to the sensor system 320 in order to receive sensor data from the sensor system 320. The localization module 312 and/or the perception module 314 may further transmit control instructions to the sensor system 320.

The ADS may further comprise a path planning module 316. The path planning module 316 is configured to determine a planned path of the vehicle 300 based on a perception and location of the vehicle as determined by the perception module 314 and the localization module 312 respectively. A planned path determined by the path planning module 316 may be sent to the maneuvering system 328 for execution. As an example, the determined current position of the vehicle on the navigation map may be transmitted to the path planning module 316.

The ADS may further comprise a decision and control module 318. The decision and control module 318 is configured to perform the control and make decisions of the ADS 310. For example, the decision and control module 318 may decide on whether the planned path determined by the path-planning module 316 should be executed or not. The decision and control module 318 may be further configured to detect any deviating behavior of the vehicle, such as deviations from the planned path, or expected trajectory of the path planning module 316. This includes both evasive maneuvers performed by the ADS 310 and by a driver of the vehicle.

It should be understood that parts of the described solution may be implemented either in the vehicle 300, in a system located external to the vehicle, or in a combination of internal and external to the vehicle; for instance, in a server in communication with the vehicle, a so-called cloud solution. The different features and principles of the embodiments may be combined in other combinations than those described. Further, the elements of the vehicle 300 (i.e. the systems and modules) may be implemented in different combinations than those described herein.

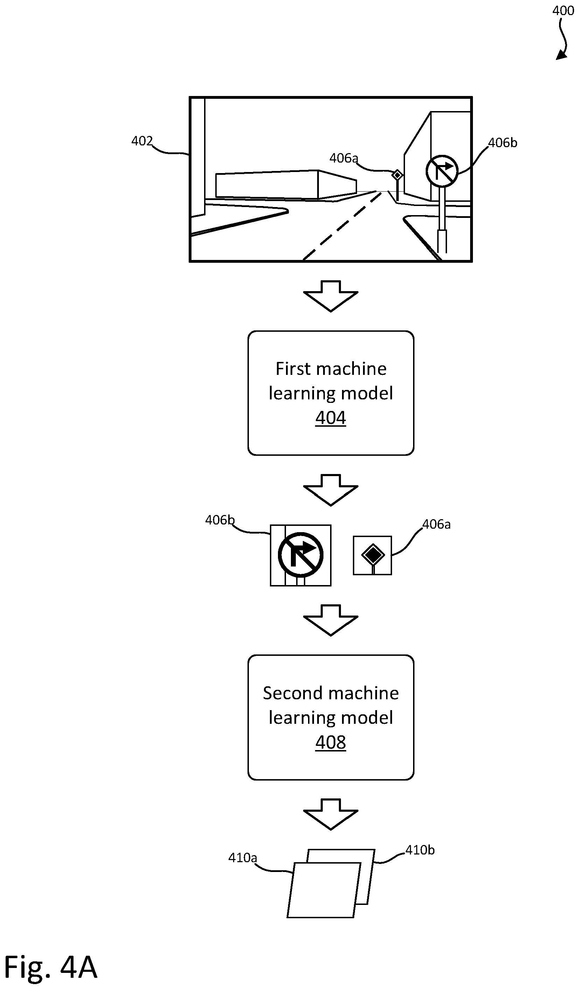

Figure 4A illustrates, by way of example, a two-stage traffic sign recognition pipeline 400, in accordance with some embodiments. A more detailed view of the second machine learning model 408 is shown in Fig. 4B and 4C. The two-stage traffic sign recognition pipeline 400 can be seen as an illustration of the steps of the method 100 as described above in connection with Fig. 1. For further details, reference is made to the above.

First, an image 402 depicting a surrounding environment of the vehicle is obtained. In the present example, the image depicts a road intersection, as well as a first traffic sign 406a and a second traffic sign 406b. However, it goes without saying that the image 402 may depict any number of traffic signs. It is further to be noted that in this example, the first traffic sign 406a is located further away from the camera, than the second traffic sign 406b, and therefore appears smaller in the image 402.

The image 402 is then fed to the first machine learning model 404 in order to detect any traffic signs in the image 402. From the first machine learning model 404, crops of the two traffic signs 406a, 406b can be obtained. As further illustrated in this example, the crop of the first traffic sign 406a will be smaller (i.e. having a lower native resolution), than the crop of the second traffic sign 406b, due to the different sizes in the original image 402.

Each crop can then be fed to the second machine learning model 408. The second machine learning model 408 being configured to determine first and second classification data 410a, 410b for the respective traffic signs depicted in the crops.

Turning now to Fig. 4B, a more detailed view of the second machine learning model 408 is shown. The second machine learning model 408 may comprise at least one cross-attention module 408d, and at least one self-attention module 408e. The second machine learning model 408 may further comprise a flattening module 408a, and a prediction module 408f.

First, the crop of a traffic sign (herein the second traffic sign 406b as an example) may be fed to the flattening module 408a. The flattening module 408a is configured to flatten the crop into an input data array 408c. The input data array may comprise numerical values of the pixels of the crop. Even though not illustrated, the input data array may comprise a plurality of vectors, e.g. one vector for each color channel in an RGB image.

The flattening module 408b may further include a positional encoding of each pixel in the input data array 408c. In other words, the input data array 408c may comprise positional information of each pixel in the input image (i.e. the cropped-out traffic sign). The positional information may be understood as any information indicative of where in the image each pixel is located. The positional encoding may e.g. be achieved by converting each pixel to a 5D object, where 3 of the dimensions correspond to the RGB value of the pixel, and the last two dimensions being a height and a width of the pixel within the input image. By including the positional encodings, the second machine learning model 408 is further provided with information about the aspect ratio of the input image, which can improve prediction results.

In a first iteration (arrow indicated by "i = *start"*), a latent array 408b with some initial values are fed, together with the input data array 408c to the cross-attention module 408d. The cross-attention module 408d then applies cross-attention between the latent array 408b and the input data array 408c, and generates a partially updated latent array 408b'. The partially updated latent array 408b' is then fed to the self-attention module 408e. The self-attention module 408e applies self-attention to the partially updated latent array 408b', to generate an updated latent array 408". The self-attention may thus be applied between the number of vectors making up the latent array.

The process of applying the cross-attention module 408d and the self-attention module 408e is then repeated for a number of iterations, herein N iterations, (arrow indicated by "i= *1...N"*), where the updated latent array 408b" is fed back to the cross-attention module 408d, together with the input data array. Put differently, the input data array 408c is fed to the cross-attention module 408d in each iteration, together with the latest updated latent array 408". The self-attention module 408e may take only the latent array (as fed from the cross-attention module 408d) as input each iteration.

After the iteration is complete, the resulting updated latent array 408b" is fed to the prediction module (arrow indicated by *"i=end"*). The prediction module 408f being configured to generate predictions for the classification data, based on the updated latent array 408b". The prediction module 408f may e.g. comprise a neural network, trained for this purpose. The output of the prediction module 408f is thus, in this example, the second classification data 410b for the second traffic sign 406b. As described in the foregoing, the latent array 408b may comprise a number of vectors. The number of vectors may be averaged to a single vector, and fed to the prediction module 408f. The prediction module may then comprise a single linear layer with softmax. The output of the layer may be an output vector with a dimension equal to the number of classes (i.e. traffic sign types). Normalization may then be applied to the output vector to produce the final classification data.

Even though illustrated in a certain way, the second machine learning model 408 may of course be implemented in a different way, depending on a specific realization. For example, the flattening module 408a and/or the prediction module 408f may be implemented as separate modules from the second machine learning model 408. Moreover, the iterative application of the cross-attention and self-attention mechanisms are herein illustrated as a feedback loop, where the same cross-attention module and self-attention module are used in each iteration. It is however also possible to have a plurality of cross-attention modules and self-attention modules, provided in an alternating series. In other words, the latent array and the input data array may be fed through a single chain of alternating cross-attention modules and self-attention modules. An example of this is shown in Fig. 4C.

As shown in Fig. 4C, the latent array 408b is fed through a number of cross-attention modules, 408d, 408d', and a number of self-attention modules 408e, 408e'. It is to be noted that any number of cross-attention modules and self-attention modules may be used (as indicated by the three dots). It is further to be noted that the weights may be shared between the repeats, i.e. the different cross-attention modules may share weights between them, and the different self-attention weights may share weights between them.

The values of the latent array are then updated throughout this process (as indicated by 408', 408", 408"', and 408ʺʺ). The final latent array 408ʺʺ is then fed to the prediction module 408f.

As is further shown, the input data array 408c can be fed to each cross-attention module 408d, 408d'. The input data array 408c may be fed as key ("K") and value ("V") to the cross-attention module, while the latent array 408b is fed as the query ("Q").

The disclosed technology has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100) for classifying a traffic sign in an image, the method (100) comprising:
obtaining (S102) the image, captured by a camera of a vehicle, depicting at least a portion of a surrounding environment of the vehicle;
identifying (S104) a region in the image corresponding to a traffic sign, by processing the image through a first machine learning model configured to output detections of traffic signs in input images;
extracting (S106), from the image, a crop corresponding to the identified region, wherein the crop has a native resolution based on a size of the identified region in relation to the obtained image; and
determining (S108) classification data of the traffic sign by processing the crop, at the native resolution, through a second machine learning model, wherein the second machine learning model is an attention-based neural network, trained to process input images of traffic signs of varying resolution and to generate corresponding classification data, wherein the second machine learning model applies attention on a pixel-level of the input images.

2. The method (100) according to claim 1, wherein the second machine learning model has been trained using a training dataset comprising a plurality of images of a variety of different resolutions, and wherein each image of the plurality of images has associated annotation data.

3. The method (100) according to claim 1 or 2, wherein the second machine learning model has a transformer-based architecture.

4. The method (100) according to any one of the claims 1 to 3, wherein the second machine learning model comprises at least one cross-attention module and at least one self-attention module.

5. The method (100) according to any one of the claims 1 to 4, wherein processing the crop through the second machine learning model comprises:
flattening the crop into a numerical input data array;
obtaining a latent array having a set of initial values;
updating the latent array by alternatingly processing the input data array and a latent array through the cross-attention module and the self-attention module for a number of iterations, thereby generating an updated latent array; and
predicting classification data for the traffic sign, based on the updated latent array.

6. The method (100) according to any one of the claims 1 to 5, wherein the first machine learning model is a traffic sign detection model, and wherein the second machine learning model is a traffic sign classification model.

7. The method (100) according to any one of the claims 1 to 6, wherein the classification data is indicative of a type of the traffic sign.

8. The method (100) according to any one of the claims 1 to 7, further comprising determining (S110) vehicle control data based on the determined classification data.

9. The method (100) according to claim 8, further comprising transmitting (S112) the vehicle control data to a control system of the vehicle.

10. The method (100) according to any one of the claims 1 to 9, further comprising displaying (S114) the classification data on a display device of the vehicle, by rendering the classification data as a graphical representation on the display device.

11. A computer program product comprising instructions, which when the program is executed by a computing device, causes the computing device to carry out the method (100) according to any one of the claims 1 to 10.

12. A computing device (200) for classifying a traffic sign in an image, the computing device (200) comprising control circuitry (202) configured to:
obtain the image, captured by a camera of a vehicle, depicting at least a portion of a surrounding environment of the vehicle;
identify a region in the image corresponding to a traffic sign, by processing the image through a first machine learning model configured to output detections of traffic signs in input images;
extract, from the image, a crop corresponding to the identified region, wherein the crop has a native resolution based on a size of the identified region in relation to the obtained image; and
determine classification data of the traffic sign by processing the crop, at the native resolution, through a second machine learning model, wherein the second machine learning model is an attention-based neural network, trained to process input images of traffic signs of varying resolution and to generate corresponding classification data, wherein the second machine learning model applies attention on a pixel-level of the input images.

13. The computing device (200) according to claim 12, wherein the control circuitry (202) is further configured to determine vehicle control data based on the determined classification data.

14. The computing device (200) according to claim 12 or 13, wherein the control circuitry (202) is further configured to display the classification data on a display device of the vehicle, by rendering the classification data as a graphical representation on the display device.

15. A vehicle (300) comprising a camera, and the computing device (200) according to any one of the claims 12 to 14.
